# EUROPEAN PATENT APPLICATION

(11) **EP 4 807 699 A1**
(43) Date of publication of application: **16.09.2026**
(21) Application number: 26162573.5
(22) Date of filing: 05.03.2026
(51) Int. Cl.: G06V 20/64, G06V 30/146

(54) **METHOD FOR DETECTING INFORMATION ABOUT OBJECTS AND OBJECT PARTS IN A SPACE**

(30) Priority: 13.03.2025 AT 501612025
(71) Applicant: AIT Austrian Institute of Technology GmbH, 1210 Wien (AT)
(72) Inventor: Beleznai, Csaba, 1220 Wien (AT); Murschitz, Markus, 1200 Wien (AT); Niedermeyer, Mario, 2052 Pernersdorf (AT); Reisinger, Lukas, 1130 Wien (AT); Zinner, Christian, 1220 Wien (AT)
(74) Representative: Wildhack & Jellinek Patentanwälte GmbH

(57) **Abstract**

Method for detecting information about objects and object parts in a space using a LiDAR sensor, which has a field of view and in which measurement data is converted into a 3D model of information about objects in the field of view, comprising the steps:
a.) acquiring a 3D point cloud by the LiDAR sensor in the field of view,
b.) converting the 3D point cloud to a 2D digital image in a calculating component,
c.) providing the 2D digital image to a detecting component which comprises a trained neural network module,
c.1) whereas the module estimates basic geometrical 3D lines of objects, preferably including endpoints of lines and
c.2) whereas the module establishes a model of information about objects in the field of view based on the model of 3D lines.

## Description

The invention relates to a method for detecting objects in a space using a LiDAR sensor, which has a field of view and in which measurement data is converted into a 3D model of objects or object parts in the field of view.

The field of 3D vision perception has seen significant advancements in recent years, driven by its critical role in various applications, particularly in self-driving, navigation and robotic manipulation. LiDAR sensors have become a key technology in the field of 3D perception, particularly for applications requiring spatially accurate environment mapping and object detection. LiDAR technology is employed in diverse fields, from monitoring people flow in airports, detecting various traffic participants and obstacles in self-driving, to enhancing robotic perception for manipulation. In these use-cases LiDAR-based depth sensing allows for estimating the 3D pose of a given object, characterized by its size, and its distance and orientation relative to the LiDAR sensor; a step which is essential for automating production and transport processes. Its ability to provide accurate spatial measurements under complex lighting situations, such as during the night or under direct sunlight, renders it suitable for both indoor and outdoor settings.

LiDAR 3D point-clouds provide accurate depth information about the surrounding objects, thus characterizing object surfaces by multiple depth measurements. However, these measurements (unlike an image of the object) are not defined at every location. This spatial irregularity causes the phenomenon of lacking data (denoted as sparsity) and spatially varying point density. Due to these complexities in the data characteristics, it is very difficult to capture the geometric abstraction of objects directly from the data.

WO 2023158556 A1 shows a method to detect objects in a 3D space by using at least two LiDAR images of a scenery from two perspectives. It has to rely on two perspectives in order to establish a reliable 3D result.

WO 2023287365 A1 discloses a method for the determination of external shape parameters of round timber using three-dimensional images. The method requires visual codes applied to each piece of timber.

US 20190049560 A1 shows in general a system and a method to LiDAR-based object detection and classification in the realm of autonomous driving.

CN 103729846 A1 discloses a LiDAR point cloud data edge detection method based on triangular irregular network.

The objective of the invention is to provide a method for detection objects or object parts, which exhibit geometric regularity, such as edges of polyhedral objects and axes of rotational-symmetric objects. Such a detection method greatly facilitates spatial manipulation of objects in real world production scenarios. This method should enable automated machines and operations which are safer, less error-prone and demand less computing power.

The invention solves this objective by the features of claim 1 with the steps:
a.) acquiring a 3D point cloud by the LiDAR sensor in the field of view,
b.) converting the 3D point cloud to a 2D image in a calculating component,
c.) providing the 2D image to a detecting component which comprises a trained neural network module,
   c.1) whereas the module estimates basic geometrical 3D lines of objects, preferably including endpoints of lines and
   c.2) whereas the module establishes a model of information about objects and object parts in the field of view based on an estimated model of 3D lines.

In order to achieve a high detection accuracy in a shorter time, it is advantageous to further implement before step a.) the neural network module which is trained with a simulated data set comprising a plurality of sceneries with objects distributed in a 3D space, whereas the data set is established by
i.) drafting a plurality of scenery concepts comprising 3D objects in a predefined 3D space, preferably the space resembling the field of view of a LiDAR sensor,
ii.) simulating a 3D point cloud of each scenery, preferably of a set of different perspectives of each scenery, whereas the point cloud is of the format of point clouds of data of the LiDAR sensor,
iii.) converting the 3D point cloud to a 2D image, and
iv.) providing a dataset to the neural network module, where the dataset comprises a number of 2D digital images, where each 2D digital image (200) is paired with the underlying full scenery description (300) in particular object or part locations.

In order to save computational resources, it is advantageous to further implement after step i.) a reduction step, which reduces the number points in each 3D point cloud or 2D image to a predefined density.

In order to get reliable results about the object position, shape and orientation, it is advantageous to further implement that the module estimates basic inner geometrical 3D lines of objects, preferably of at least partially cylindrical and straight objects, such as tree logs, steel cylinders, concrete blocks or object edges.

In order to maintain the advantages of the invention in real production environments and in process engineering it is advantageous to further implement the steps a.) to c.2) in real time.

In order to furthermore maintain the advantages of the invention in real production environments and in process engineering it is advantageous to implement the model of objects in the field of view is provided to a display device and/or to a system comprising a robotic manipulator.

It is also advantageous to provide the model of objects in the field of view to an interface for users, and whereas the model is manipulated according to predefined constraints, whereas the manipulated model is provided to a graphical display and/or a memory of an archive.

In an advantageous embodiment, a system for detecting objects is provided, with a LiDAR system comprising a LiDAR sensor, which has a field of view and in which measurement data is converted into a 3D model of objects in the field of view, wherein the LiDAR system is designed to implement the method according to the method herewith described.

In an advantageous embodiment, an Arrangement for detecting objects is provided, comprising a mechanically driven manipulator and work area, preferably a loading area of a transport vehicle. In order to obtain an effective form of automation, it is advantageous if the manipulator is a robotic manipulator with a control unit and whereas the arrangement furthermore comprises a LiDAR system above, whereby there is a data link between the LiDAR system and the control unit.

In an advantageous embodiment of the arrangement, the manipulator has a movable upper section and an at least rotatable lower section, and wherein the LiDAR sensor is attached to the lower section of the manipulator in such a way that a manipulating area of the manipulator lies substantially in the field of view of the LiDAR system.

One preferred, albeit not restricting, embodiment of the invention is presented with regard to the figures:
**Figure 1** schematically shows a flowchart of learning (top) and of testing (bottom) within the method,
**Figure 2** schematically shows a workflow of generating a synthetic LiDAR range image
**Figure 3** to **6** each schematically show a LiDAR sensor observing an object,
**Figure 7** to **9** show embodiments of crane or transportation systems,
**Figure 10** shows an embodiment of the system on a truck.

The recent advent of Neural Networks may trigger the emergence of many successful representations and approaches, which can cope with difficult data traits such as spatial sparsity and irregularity. We propose a geometry-oriented neural network, which when trained on large quantities of labelled spatial data, can learn to represent object geometry both at detail (parts) and object-level. Neural learning can gain robustness with respect to noise and variable density, if during training these complexities are encountered in diverse forms (varying noise, distances, viewpoints, etc.).

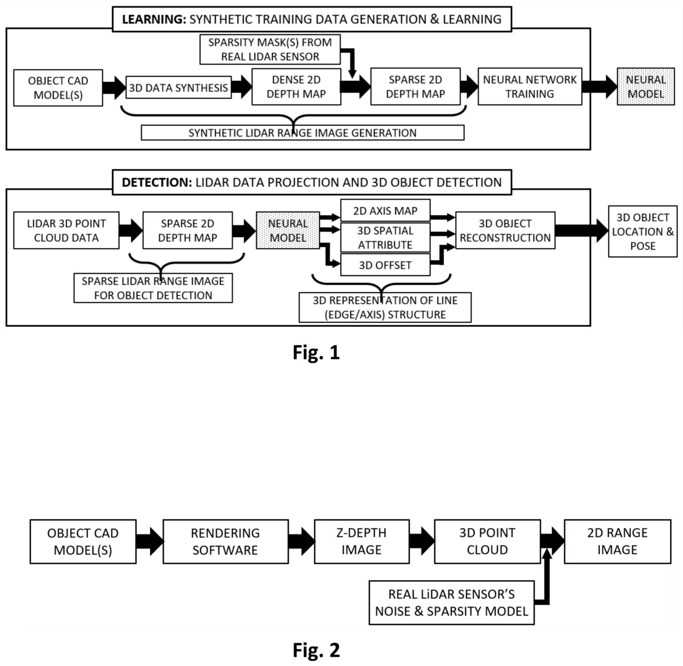

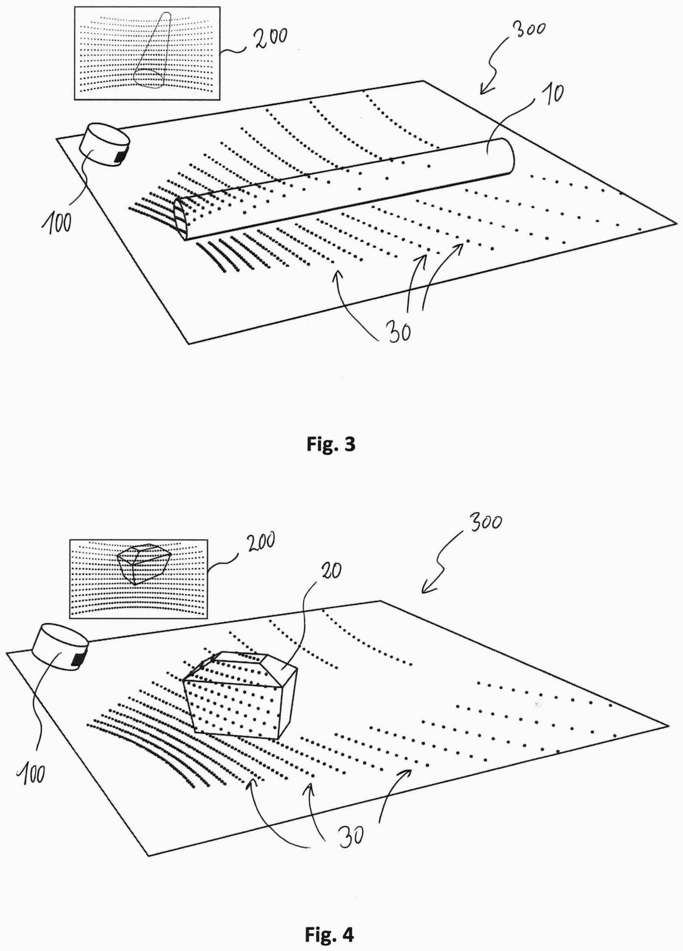

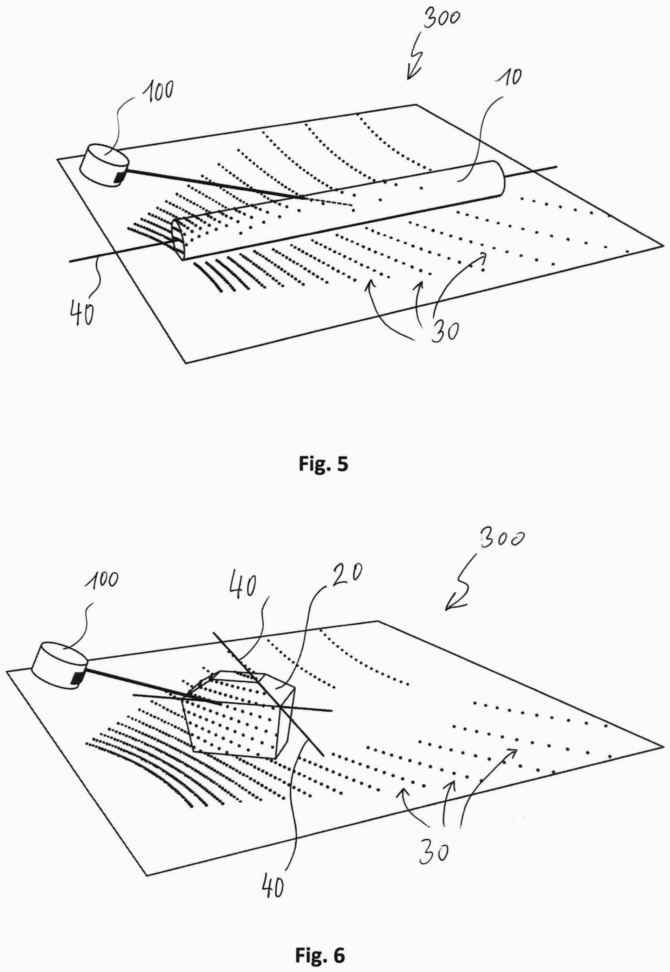

The invention addresses detection scenarios in industrial tasks which involve robotic systems manipulating objects with regular geometries. The primary application domain of the proposed methodology is in automated systems and robotics, where an effective robotic manipulation requires the precise estimation of the 3D object location and orientation with respect to the sensor. To this end, the invention comprises a 3D object detection and pose estimation of regular geometric objects using LiDAR (Light Detection And Ranging) range-images and deep neural networks. It comprises a neural network learning and detection pipeline, using simulated and/or real LiDAR sensor's range-image data, and aiming at the detection and pose estimation of objects with a regular geometry in the 3D space. The following representational aspects are crucial to this end:
- Synthetic LiDAR range image generation for neural network training: using Computer Graphics to generate a synthetic depth image for a scenery with objects. In a next step, converting this depth image into a simulated LiDAR 2D range-image, by a 3D-to-2D projection and structured data removal step, the so called sparsification. This synthesis step mimics real LiDAR sensor data, and these data are used next for neural learning (see Fig. 2).
- Sparse LiDAR range image for object detection: when using a real LiDAR sensor 100 for detection, a similar 3D-to-2D projection of real LiDAR (point-cloud) data into a range-image is performed. This step involves no data post-processing such as interpolation or densification. In a next step, this range-image is used for neural 3D object detection and pose estimation in various industrial scenarios (see **Fig. 3** and **Fig. 4****).**
- 3D representation of line (edge/axis) structures: the neural learning task is formulated such that the depth information of the input sparse range-image (depth map) is used within a trained neural network to estimate spatial variables. These spatial variables can describe 3D point positions and further spatial attributes (e.g., radius) along elongated structures (axes, edges) of geometrically regular objects in the scenery. The totality of these estimated 3D points can be used the reconstruct the 3D location and pose of the whole object (see **Fig. 5** and **Fig. 6**).

As to the background, "LiDAR" denotes a depth measurement sensor which can accurately measure the metric distance to a given target along several emitted laser rays.

A "range-image" is obtained by projecting a LiDAR 3D point-cloud (along each laser beam) onto a virtual camera's image plane. This 3D-to-2D projection results in a so-called "range-view" or "range-image". In this image representation, each pixel contains a 3D distance information instead of RGB values.

A "component" in this context is a computer device, a computerised part, a server or a software module.

"3D pose estimation for objects" is a known topic in computer vision and robotics. It refers to the estimation of a spatial transformation (consisting of translation, rotation and scaling), which aligns the object with a given reference pose (in our case: pose of the LiDAR sensor).

"Regular geometry" denotes objects with well-defined 3D shapes, such as (i) basic geometric primitives in form of plane segments, cuboids, cylinders, spheres and (ii) man-made objects composed of such simple geometries. In our context, combinations of multiple basic geometries forming polyhedral objects, such as a container composed of a slab-shaped base and a pyramid-shaped top, are included as well.

**Fig. 1** displays the proposed aspects within the context of the neural learning and testing. In the "learning" part (top), models of objects in sceneries are designed with CAD. Those models are transferred to a 3D data synthesis. This 3D data set is projected to a 2D depth map of a certain, comparable high density. Objects in the synthetic scene are viewed by a simulated camera, acting as a virtual LiDAR sensor. Accordingly, this camera is set to have the same/similar field-of-view as the real LiDAR sensor to be simulated. In a next step, a dense range image (synthetic z-depth) is computed from the viewpoint of this camera, providing the metric distance between a given scene point and camera at every pixel location. The size of the computed range image can be arbitrary, but a spatial resolution above 600x600 pixels is recommended to preserve all spatial details gathered from the scene. To simulate the lower density (sparsity) of a real LiDAR sensor, the computed dense range image is thinned out in a sparsification step. To exactly match the sparsity pattern of a real LiDAR sensor, one or more mask images are derived from a real LiDAR sensor. The mask generation step proceeds as follows: one or several real LiDAR range images are used to extract the entirety of all image pixels with zero entries, that is: all pixels where typically no data is projected, as the back-reflected laser pattern only scans with a specific spatial spacing. Those pixels where typically data is missing are used to create one or multiple binary masks, where 0-valued entries indicate all pixels where data should be removed, whereas 1-valued entries, where data should be kept. The mask image is scaled to the same size as the computed depth image. Data sparsification (structured data removal) is carried out by multiplying the computed dense depth (range) image with the mask image. In an optional step, additional depth noise can be added at all pixels where depth data is available.

This establishes the synthetic LiDAR range image generation. A set of images like this comprising different sceneries and sceneries from different perspectives is provided then to a neural network for training. Typically, 50-100K images and matching annotations describing 3D object positions are generated. The outcome is a trained neural network that includes a neural model ready to apply to real data.

By these steps, a 3D point cloud of each scenery is simulated, preferably of a set of different perspectives of each scenery, whereas the point cloud is of the format of point clouds of data of the LiDAR sensor, which is a key aspect, namely simulating similar point density (sparse data structure), as in the LiDAR sensor data.

Moreover, the to-be-detected object geometry is included in the scenery descriptions 300 in various configurations, such as multiple instances, various orientations with respect to the LiDAR sensor 100, various distances from the LiDAR sensor 100. Even partially occluded objects are included, in order to simulate adverse circumstances and to have the system trained for those circumstances as well.

The workflow is also shown in **Fig. 1****.** CAD models are provided to a rendering software in order to establish a virtual 3D scenery description 300 with objects in it. Additionally, the viewpoint of a LiDAR sensor 100 with respect to the scenery 300 is selected and from this very viewpoint a z-depths image is created representing the required synthetic LiDAR range image (x-axis and y-axis are the image plane dimensions of the required 2D digital image 200 while the z-axis value represents the depth of each point). However, the final image should exhibit the same data quality pertaining to, e.g., noise and sparsity, as those of a specific real LiDAR sensor 100. Thus, the interim image is provided to a model of such a data quality. The model renders the image comparable to a filter to a 2D range image (or 2D digital image 200) of a scenery description 300, advantageously without filling or interpolating missing data entries. This input 2D range image is generated by projecting 3D LiDAR data points along the individual laser beams onto the image plane of a virtual camera. At the image plane, every pixel with an incoming beam is updated by the corresponding metric distance.

These steps are repeated multiple times for a plurality of scenery descriptions 300 and a plurality of viewpoints (perspectives), since training quality of the neural networks improves with the amount and diversity of training data.

Therefore, the synthetic LiDAR range image generation is established by a method for generating synthetic depth images for training a neural network, comprising:
- utilizing computer graphics software to create three-dimensional models of regular geometric objects,
- rendering synthetic depth images from the generated models to simulate LiDAR range images,
- employing the synthetic range images as training data for a neural network designed to detect specific edges and internal axes of geometric objects, thereby enhancing the model's ability to generalize to real-world LiDAR data.

In the "detection" part (**Fig. 1****,** bottom) a LiDAR sensor 100 observes a scenery description 300 in real 3D space and forms 3D point cloud data. This is according to the state-of-the-art data processing in the realm of LiDAR converted to a sparse 2D depth map that is the 2D digital image 200 (see also **Fig. 3** and **Fig. 4**) and provided to a component comprising the trained neural network. Since the neural network has been trained with this type of data, the likelihood of estimating the correct object parameters in the scene is high. The aim is not to establish a model of the scenery itself, however, it is to establish a plurality of 2D axes in the field of view leading to 3D spatial attributes of simple objects. The 3D object reconstruction then is the final step in order to provide a reliable model of 3D object locations and their poses in the scenery observed. This step of forming a 3D representation permits an effective detection mechanism in presence of occlusions.

**Fig. 3** and **Fig. 4** show the formation of sparse 2D depth map images from a 3D LiDAR scanning process for a cylindric object 10 (**Fig**. **3**) and polyhedral object 20 (**Fig. 4**). The LiDAR sensor 100 has a certain 3D position within a scenery description 300 and establishes a set of measuring data resulting in a point cloud 30. This is converted to a 2D depth map 200.

**Fig. 5** and **Fig. 6** show the estimation of axis or edge points (3D centers), in the case when they are not directly visible (**Fig. 5**, spatial offset to visible surface > 0) and when they are visible (**Fig. 6****,** spatial offset to visible surface = 0). The line structure comprises the estimation of spatial variables, which allow for the 3D reconstruction of both a not-directly-visible (object-internal) axis 40 and a directly-visible specific edge 50 of an object. These spatial variables encompass a 2D axis map, a 3D offset vector and additional spatial attributes, such as a distance to center or radius. The 2D axis map (not shown) delineates range-image points which lie along an axis 40 or an edge 50. The 3D offset vector (from a LiDAR point on the cylinder surface to the internal axis, along a LiDAR ray, shown as a dashed line in **Fig. 5**) leads towards a specific 3D point (denoted as 3D center), which is a point on an axis 40 (cylinder) or on an edge 50 (object edge). By estimating a large set of 3D axis/edge center points, the axis can be reconstructed in the 3D space. This step can ultimately lead to the reconstruction of the entire 3D object from its edge/axis components, thus yielding 3D object location and pose.

Hence, a method for detecting axes and edges of regular geometric objects using LiDAR data, is also applied comprising:
- acquiring range images from a LiDAR sensor 100,
- utilizing a neural network, e.g., a convolutional neural network (CNN), to analyze the preprocessed images and identify object edges/axes based on depth information in the range-image.

On this basis, a 3D edge- and axis-representation is implemented by a parameter estimation step for estimating the spatial parameters (e.g., 3D position, radius) of multiple axes, internal axis or external edges of regular geometric objects, comprising:
- receiving processed LiDAR range images that depict the geometric structure of an object,
- applying a trained neural network model to estimate a set of spatial parameters,
- reconstructing the 3D geometric shape and spatial relationships based on the estimated parameters.

The proposed method relates to a depth sensing and detection system. It is a system for detecting specific edges and internal axes of regular geometric objects. Typical targeted regular geometric objects are boxes, containers, precast concrete blocks, steel cylinders and timber. The system comprises at least:
- a LiDAR sensor 100 configured to capture range images of the environment, generating point cloud data representing the surfaces of objects,
- a processing unit (not shown) that receives the point cloud data and applies neural network algorithms to identify geometric features, including edges and internal axes of the objects.

The results of the method are provided to a user interface. This user interface can be of different types depending of the technical field (like robotics, automated production, quality control). The user interface may, therefore, be required for visualizing detected edges and internal axes. To this end it comprises:
- A display module that presents the identified edges and internal axes overlaid on the original LiDAR range images, and wherein
- interactive visualization allows users to analyze and manipulate the visualized data for further analysis.

These features outline a comprehensive approach to utilizing LiDAR technology and deep neural networks for the detection of specific object geometric features, emphasizing both the methods and systems involved.

A further advantageous feature is real-time processing. This is implemented by a processing speed where a practical case of robot-scene interaction on resting or slowly moving objects is meaningful. In our case it is a calculation speed of about 1 frame per second and above. A system for real-time detection of edges and internal axes, comprises therefore:
- a LiDAR sensor 100 configured to provide time-continuous range imaging with a typical integration time of 100-500ms, but in a continuous data acquisition fashion, and
- a processing unit capable of executing neural network algorithms in real-time to detect edges and internal axes as new data is received.

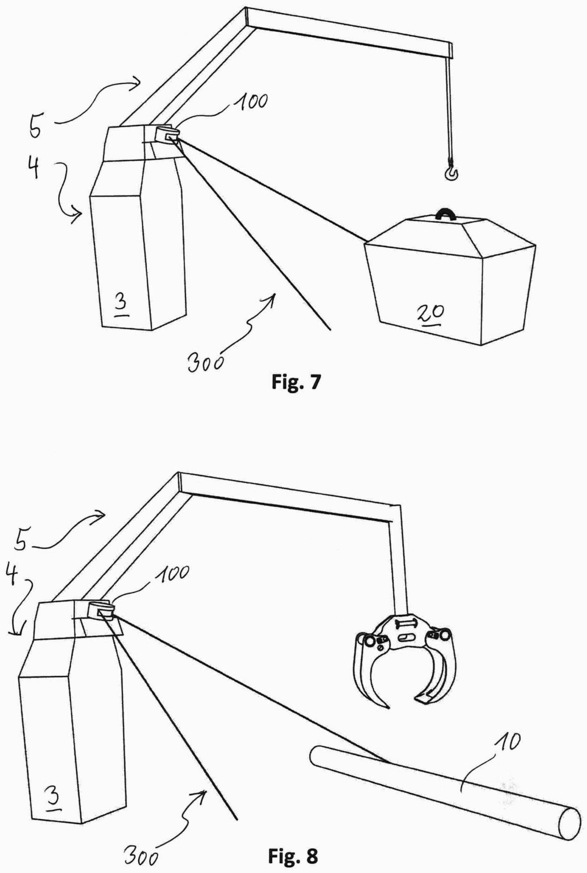

A typical application of the invention is automated robotics. In Fig. 7 we have a robotic arm 3 typically with several movable and controllable segments, for example to reach an object such as a polyhedral object 20, to lift it and move it to a second position. The LiDAR sensor 100 is now attached to a lower section 4 of the robotic arm 3 in order to have the working area of the robotic arm in the field of view, but also to be able to observe more precise movements of the robotic arm 3, which are carried out with the upper section 5, from a fixed point. A comparable situation is depicted in Fig. 8 showing a robotic arm 3 working with a cylindrical object 10 such as a tree log, a steel cylinder, a precast concrete block, pallets and containers.

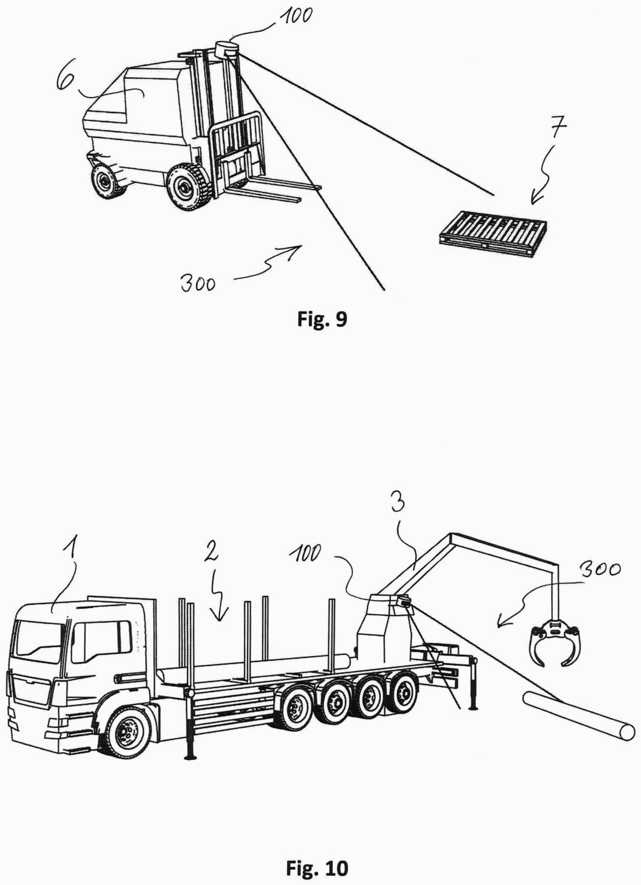

Fig. 9 shows a forklift vehicle 6 that typically approaches pallets 7, empty or carrying a cargo, and moves them from positions to be recognized to desired second positions. To do this, the pallets 7 are picked up, lifted and transported by the forklift vehicle 6. The invention can also be useful here by detecting pallet edges and reconstructing pallet objects. Thus it can help, for example, in the autonomous operation of forklift vehicles 6. Again, a LiDAR sensor 100 is attached to the forklift vehicle 6, preferably located to match its field of view with the working area of the forklift vehicle.

In **Fig. 10** a truck 1 equipped with a timber crane 3 and a loading area 2 is shown. A worker now may perform the task of selecting timber beneath the truck to its loading area via timber crane 3. In this example, the timber crane 3 comprises the LiDAR sensor 100 that has a field of view directed at least to a scenery description 300 on the ground where timber pieces are provided. Using the method and system described above, the LiDAR sensor provides its data to a control unit or system. It is not shown in **Fig. 7** but it can easily be incorporated to already existing truck electronics or alternatively to separate electronic devices in or at the truck 1. The timber crane 3 may then pick up timber by timber on the loading area. Timber is in most cases a regular geometric object, namely approximated by a cylindrical shape 10.

In each embodiment, a completely or partially unknown scenery description 300 is to be recognized and the findings are to be converted into control commands, graphical representations on displays for work personnel or for data acquisition and analysis. In a typical application, work personnel sees the detected objects (e.g., tree log and its estimated metric volume) on a display, or detected objects are used to train another detector (for example in a LiDAR-camera sensor combination setup).

A system, e.g., for automated robotic manipulation of regular geometric objects, comprises therefore:
- a robotic manipulator (arm, end-effector) equipped with a LiDAR sensor 100 for capturing range images of objects in its environment,
- a processing unit that employs a neural network trained through synthetic depth images and uses real LiDAR data during detection phase to detect specific edges and internal axes of the objects,
- control algorithms that utilize the detected geometric features to guide the robotic setup in accurately grasping, moving, and manipulating the objects based on their identified geometries.

### List of reference numbers

- 1: truck
- 2: loading area
- 3: robotic manipulator
- 4: lower section
- 5: higher section
- 6: forklift vehicle
- 7: pallet
- 10: cylindrical object
- 20: polyhedral object
- 30: point cloud
- 40: axis
- 50: edge
- 100: LiDAR Sensor
- 200: 2D digital image
- 300: scenery description

## Claims

1. Method for detecting information about objects and object parts in a space using a LiDAR sensor (100), which has a field of view and in which measurement data is converted into a 3D model of information about objects in the field of view, comprising the steps:
a.) acquiring a 3D point cloud (30) by the LiDAR sensor (100) in the field of view,
b.) converting the 3D point cloud (30) to a 2D digital image (200) in a calculating component,
c.) providing the 2D digital image (200) to a detecting component which comprises a trained neural network module,
c.1) whereas the module estimates basic geometrical 3D lines of objects, preferably including endpoints of lines and
c.2) whereas the module establishes a model of information about objects in the field of view based on the model of 3D lines.

2. Method for detecting information about objects in a space according to claim 1, whereas before step a.) the neural network module is trained with a data set comprising a plurality of scenery descriptions (300) with objects in space, whereas the data set is established by
i.) drafting a plurality of scenery concepts comprising 3D objects in a predefined 3D space, preferably the space resembling the field of view of a LiDAR sensor (100),
ii.) simulating a 3D point cloud (30) of each scenery description (300), preferably of a set of different perspectives of each scenery, whereas the point cloud is of the format of point clouds data of the LiDAR sensor (100),
iii.) converting the 3D point cloud (30) to a 2D digital image (200), and
iv.) providing a dataset to the neural network module, where the dataset comprises a number of 2D digital images, where each 2D digital image (200) is paired with the underlying full scenery description (300) in particular object or part locations.

3. Method for detecting information about objects in a space according to claim 2, whereas after step i.) the number of points in each 3D point cloud or 2D digital image is reduced to a predefined density.

4. Method for detecting information about objects in a space according to one of the preceding claims, whereas the module estimates basic inner geometrical 3D lines of objects, preferably of at least partially cylindrical and straight objects, such as tree logs, steel cylinders or concrete blocks.

5. Method for detecting information about objects in a space according to one of the preceding claims, whereas the steps a.) to c.2) are implemented in real time.

6. Method for detecting information about objects in a space according to one of the preceding claims, whereas the model of objects in the field of view is provided to a display device and/or to a system comprising a robotic manipulator (3).

7. Method for detecting information about objects in a space according to one of the preceding claims, whereas the model of objects in the field of view is provided to an interface for users, and whereas the model is manipulated according to predefined constraints, whereas the manipulated model is provided to a graphical display and/or a memory of an archive.

8. System for detecting information about objects in a space, with a LiDAR system comprising a LiDAR sensor (100), which has a field of view and in which measurement data is converted into a 3D model of objects in the field of view, wherein the LiDAR system is designed to implement the method according to one of the claims 1 to 7.

9. Arrangement for detecting information about objects in a space, comprising a mechanically driven manipulator and work area, preferably a loading area (2) of a transport vehicle, **characterised in that** the manipulator is a robotic manipulator (3) with a control unit and whereas the arrangement furthermore comprises a LiDAR system of claim 8, whereby there is a data link between the LiDAR system and the control unit.

10. Arrangement according to claim 9, wherein further the manipulator has a movable upper section (5) and an at least rotatable lower section (4), and wherein the LiDAR sensor (100) is attached to the lower section (4) of the manipulator in such a way that a manipulating area of the manipulator lies substantially in the field of view of the LiDAR system.
